# EUROPÄISCHE PATENTSCHRIFT

(11) **EP 0 915 070 B1**
(45) Veröffentlichungstag und Bekanntmachung des Hinweises auf die Patenterteilung: **19.02.2003**
(21) Anmeldenummer: 98119179.4
(22) Anmeldetag: 10.10.1998
(51) Int. Cl.: C04B 35/80, C04B 35/573, F16D 69/02

(54) **Verfahren zur Herstellung eines mit Kohlenstoff-Fasern verstärkten, keramisierten Formkörpers und Verwendung eines solchen Formkörpers**
Method of making carbon fibre reinforced ceramified shaped body and use of such a shaped body
Procédé de fabrication d'un corps moulé céramifié et renforcé par fibres de carbone et l'utilisation d'un tel corps moulé

(30) Priorität: 10.11.1997 DE 19749462
(43) Veröffentlichungstag der Anmeldung: 12.05.1999
(73) Patentinhaber: Deutsches Zentrum für Luft- und Raumfahrt e.V., 53175 Bonn (DE)
(72) Erfinder: Krenkel, Walter, 71272 Renningen (DE); Heidenreich, Bernhard, 71679 Asperg (DE)
(74) Vertreter: Grimm, Ekkehard, Dipl.-Phys.

(56) Entgegenhaltungen:
- WO-A-97/22815
- GB-A- 1 457 757

## Beschreibung

Die vorliegende Erfindung betrifft ein Verfahren zur Herstellung eines mit Kohlenstoff-Fasern verstärkten, keramisierten Formkörpers, bei dem in eine Kohlenstoff-Fasern enthaltende, poröse Vorform des Formkörpers Polymerharz, insbesondere ein Polymerharz auf Phenol-Basis, infiltriert und gehärtet wird, der so erhaltene Grünkörper einer Pyrolyse zur Umwandlung des Polymerharzes in Kohlenstoff unterworfen wird und in diesen danach Silizium, vorzugsweise in flüssiger Phase, bei einer Temperatur von mindestens 1400°C infiltriert wird, das mit Kohlenstoff zu Siliziumkarbid reagiert.

Weiterhin betrifft die Erfindung die Verwendung eines nach dem erfindungsgemäßen Verfahren hergestellten Formkörpers.

Ein Verfahren der vorstehend angegebenen Art ist aus der GB-A-1 457 757 bekannt. Nach dieser Druckschrift werden solche Formkörper hergestellt, die eine Matrix aufweisen, die aus Siliziumkarbid und elementarem Silizium besteht. Dadurch, daß die Matrix des Formkörpers noch in erheblichem Umfang freies Silizium enthält, ist die Verwendung dieses Formkörpers bei Temperaturen, die im Bereich des Schmelzpunkts von Silizium liegen, nicht vorteilhaft. Gerade solche Temperaturen, die im Bereich von 1400°C liegen, können beim Einsatz solcher Formkörper als Reibeinheiten, insbesondere Bremsen, entstehen. Durch das Erweichen des Siliziums bei diesen hohen Temperaturen ist eine ausreichende Bremswirkung nicht mehr gewährleistet. Außerdem können die mechanischen Eigenschaften solcher Formkörper stark beeinträchtigt werden. Weiterhin liegt das Problem vor, daß sich dann, wenn flüssiges Silizium auf Erstarrungstemperatur abgekühlt wird, das Silizium ausdehnt und somit innere Spannungen in dem Formkörper entstehen, die seine Brauchbarkeit in Frage stellen bzw. zumindest stark beeinflussen.

Ausgehend von dem vorstehend angegebenen Stand der Technik und der aufgezeigten Problematik liegt der vorliegenden Erfindung die Aufgabe zugrunde, ein Verfahren der eingangs genannten Art derart weiterzubilden, daß der Formkörper nach der Infiltration des Siliziums einen Gehalt an freiem Silizium aufweist, der kleiner 2% bezogen auf die Masse des Formkörpers beträgt und dessen Porosität maximal 5% bezogen auf das Gesamtvolumen des Formkörpers ist.

Die vorstehende Aufgabe wird erfindungsgemäß dadurch gelöst, daß zur Herstellung eines keramisierten Formkörpers mit einem Gehalt an freiem Silizium von kleiner als 2 Gew.-% und einer Restporosität von maximal 5 Vol.-% vor der Pyrolyse die mit Polymerharz infiltrierte Vorform auf eine Wärmebehandlungstemperatur erhitzt wird, die 20°C bis 70°C über der Temperatur liegt, bei der das Polymerharz aushärtet, daß die Wärmebehandlungstemperatur für eine Dauer von mindestens 1 Stunde aufrechterhalten und danach der Grünkörper auf Raumtemperatur mit einer Kühlrate von wenigstens 30°C/h abgekühlt wird, daß während der Pyrolyse der Grünkörper einer mit zunehmender Dicke des Grünkörpers ansteigenden, mechanischen Druckbelastung, insbesondere Flächenpressung, unterworfen wird, und daß nach Abschluß der Pyrolyse der Grünkörper mit Kühlraten im Bereich von 30°C/h bis 300°C/h auf Raumtemperatur abgekühlt wird.

Durch diese Vorbehandlung der Vorform vor der Infiltration des Siliziums werden, inbesondere durch die definierte Wärmebehandlung und die Druckbelastung bzw. Flächenpressung während der Pyrolyse, und durch die definierte Abkühlung des Grünkörpers nach der Pyrolyse auf Raumtemperatur Porositäten in Form von translaminaren Rissen oder Kanälen erzeugt. Damit wird sichergestellt, daß nach der Infiltration von Silizium in diese Porenstruktur und nach der Silizierung der Anteil an freiem Silizium, bezogen auf die Masse des Formkörpers, kleiner 2% beträgt und die Porosität 5% bezogen auf das Gesamtvolumen nicht übersteigt. Dieser geringe Anteil an freiem Silizium stellt sicher, daß der Formkörper hohen Temperaturbelastungen standhält, die bis in den Bereich der Schmelztemperatur von Silizium und darüberhinaus reichen. Weiterhin werden durch die definierte Wärmebehandlung Spannungen in der Vorform des Formkörpers abgebaut und damit die Verzugs- und Delaminationsgefahr während der anschließenden, vorzunehmenden Pyrolyse verringert. Außerdem führt die Temperaturbehandlung während der Silizierung bei einer Temperatur von < 1800°C für eine Zeitdauer von mindestens 3 Stunden oder bei einer Temperatur von > 1800°C bis etwa 2100°C für eine Zeitdauer von weniger als 3 Stunden zu niedriger Porosität und niedrigen, freien Siliziumgehalten.

Das erfindungsgemäße Verfahren bringt weiterhin den Vorteil mit sich, daß zur Herstellung des Formkörpers Lang- bzw. Endlosfasern aus Kohlenstoff einsetzbar sind. Solche Lang- bzw. Endlosfasem führen wiederum zu einem Formkörper, der eine hohe mechanische Festigkeit besitzt. Beispielsweise kann die Biegefestigkeit im Bereich von 50 MPa oder sogar darüber liegen. Auch zeichnet sich der nach dem Verfahren hergestellte Formkörper durch einen geringen Verzug und eine hohe Formtreue in allen Prozeßschritten aus. Dies bedeutet, daß der sich ergebende Formkörper während der einzelnen Fertigungsschritte bereits mit der Endform angenäherten Maßen dimensioniert werden kann. Dies gilt auch bei der Grünkörperherstellung und der Pyrolyse, da der Schwund gering ist. Somit ist auch keine Zugabe von Pulvern zur Reduzierung des Schwunds bzw. der Porosität notwendig. Von Vorteil bei dieser Verfahrensweise ist, daß der Grünkörper damit nur aus zwei Ausgangswerkstoffen besteht; einerseits dem Fasergerüst und andererseits einer Matrix aus Flüssigpolymer, d.h. es werden Pulverzugaben in die Matrix vermieden bzw. nicht notwendig, was fertigungstechnisch Vorteile dahingehend mit sich bringt, daß bei der Fertigung und Infiltration der Fasergerüste eine schnelle Infiltration möglich ist und große Bauteile herstellbar sind, da aufgrund des nicht vorhandenen Pulvers ein Ausschwemmen solcher Pulver nicht gegeben ist. Erfindungsgemäße Formkörper können weiterhin mit Fasergehalten gefertigt werden, die bis zu 70 Volumen-% bezogen auf das Gesamtvolumen des Formkörpers betragen. Solche hohen Gehalte an Kohlenstoff-Fasern führen zu einer hohen Festigkeit des Endkörpers mit einem geringen Schwund während der einzelnen Fertigungsschritte. Das Verfahren erlaubt darüberhinaus einen lokal unterschiedlichen Werkstoffaufbau durch Einstellung der Faserorientierung und/oder des Fasergehalts, wodurch günstige, werkstoffgerechte Krafteinleitungen in das aus dem Formkörper hergestellte Bauteil, je nach Anforderungen, möglich sind. Um eine gleichmäßige Durchdringung, beispielsweise einer Gewebevorform aus Kohlenstoff-Fasern mit Polymerharz zu gewährleisten, wird bevorzugt das Polymerharz über eine Gewebeschnittkante (d.h. eine Kante, die senkrecht bzw. quer zu den Gewebelagen liegt) parallel zu den Gewebelagen und über die gesamte Dicke der Vorform in die Vorform injiziert. Hierbei kann der Vorkörper in eine entsprechende Aufnahme eingebracht werden, so daß die Gewebeschnittkanten frei verbleiben, über die dann das Polymerharz definiert injiziert wird. Die Infiltration des Polymerharzes sollte hierbei mit einer Druckdifferenz von 0,1 bar bis 10 bar erfolgen. Darüberhinaus sollte die Vorform vor der Injizierung des Harzes entgast werden, um flüchtige Bestandteile zu entfernen. Als Polymerharz eignet sich insbesondere ein mit Wasser oder Alkohol (z.B. Ethanol) gelöstes Phenol vom Typ Resol, wobei allerdings ein solches, das in Wasser gelöst ist, zu bevorzugen ist. Ein solches Phenolharz ist preisgünstig und erfordert, insbesondere aufgrund der Löslichkeit in Wasser, keine umwelttechnischen Maßnahmen, die ansonsten bei anderen flüchtigen Lösungsmitteln erforderlich wären.

Gemäß einer weiteren Maßnahme wird die Wärmebehandlung der mit Harz infiltrierten Vorform in Luftatmosphäre bei Umgebungsdruck durchgeführt. Die Wärmebehandlung, wie sie erfindungsgemäß angegeben ist, führt zur Bildung von definierten Rißstrukturen, die die Segmentierung der Matrix, d.h. die Ausbildung der translaminaren Matrixkanäle bei der Pyrolyse beeinflussen. Dies erfolgt beispielsweise dadurch, daß ein späteres (nach der Pyrolyse vorliegendes) Mikrorißmuster ansatzweise bereits vor der Pyrolyse vorliegt, wodurch die Gefahr von großflächigen Fehlstellen, wie zum Beispiel Delamination, deutlich verringert wird. Damit wird der Aufbau einer Mikrostruktur mit Spaltbreiten zwischen 5 um und 25 µm für die anschließende Silizierung begünstigt. Mit diesen Spaltbreiten kann ein Gehalt an freiem Silizium nach der Silizierung kleiner 2% erreicht werden. Ein weiterer Vorteil dieses Verfahrens ist derjenige, daß nur eine einmalige Pyrolyse und nur eine einmalige Silizierung nötig sind, die den Vorteil mit sich bringen, daß eine Nachinfiltration der Matrix entfällt und daß damit ein schneller Prozeßverlauf gewährleistet ist.

Der Abbau von Spannungen, die in der Vorform des Formkörpers entstehen, kann für die Vorform schonend dadurch durchgeführt werden, daß zur Erreichung der Wärmebehandlungstemperatur die Wärmebehandlung in Stufen mit unterschiedlichen Aufheizraten durchgeführt wird. Diese Aufheizraten von Raumtemperatur bis auf Wärmebehandlungstemperatur liegen im Bereich von 30°C/h bis 300°C/h.

Es wurde festgestellt, daß durch eine mechanische Druckbelastung, insbesondere Flächenpressung, indem der Grünkörper mit gelochten und/oder genuteten Graphitoder Stahlplatten während der Pyrolyse beschwert wird, die Rißbildung im Grünkörper so beeinflußt wird, daß Spaltbreiten zwischen 5 um und 25 µm erreicht werden, insbesondere auch unter dem Gesichtspunkt, daß die Entstehung von Delaminationen verhindert wird. Bei dieser Mikrorißstruktur mit Spaltbreiten zwischen 5 um und 25 um, die nach der Pyrolyse erhalten wird, wird ein Gehalt an freiem Silizium von kleiner 2% nach der Infiltration von Silizium sichergestellt. Die Flächenpressung sollte bevorzugt mit genuteten Platten durchgeführt werden, wobei der Anteil der Kontaktflächen zwischen den Nuten, die auf der Vorform des Formkörpers aufliegen, zwischen 30% und 60% der Gesamtplattenfläche liegt. Solche Platten sollten vorzugsweise von zwei gegenüberliegenden Seiten an dem Grünkörper anliegen. Es hat sich gezeigt, daß bei einem Laminataufbau mit zweidimensionalen Gewebeschichten nur eine Druckbelastung senkrecht zu den Gewebeebenen erforderlich ist. Weiterhin wurde festgestellt, daß die nötige Flächenpressung mit zunehmender Bauteildicke ansteigt. Die jeweilige, minimale, erforderliche Flächenpressung in Form des anzuwendenden Drucks P (der Druck auf den Vorkörper während der Pyrolyse) kann aus P = 100 + t x 65 [N/m²] errechnet werden, wobei t die Wandstärke der Vorform in [mm] angibt, und zwar in Richtung der Druckbeaufschlagung.

Durch eine gleichmäßige Verteilung der mechanischen Druckbelastung auf den Grünkörper wird sichergestellt, daß während der Pyrolyse der Grünkörper stabilisiert ist und ein Verzug verhindert wird.

Um die Wirtschaftlichkeit des Verfahrens zu erhöhen, kann die Pyrolyse mehrerer Grünkörper in gestapelter Anordnung durchgeführt werden. Hierbei werden im wechselnden Aufbau genutete Druckplatten und Grünkörper so geschichtet, daß sich ein Stapel bildet.

Vorzugsweise sollte die Pyrolyse unter Inertgas oder bei einem Druck ≤ 1 mbar durchgeführt werden; hierdurch wird erreicht, daß eine Oxidation des Grünkörpers vermieden und eine hohe Kohlenstoffausbeute des Polymerharzes erzielt wird. Falls Inertgas eingesetzt wird, sollte vorzugsweise Stickstoff verwendet werden, dessen Reinheit wenigstens 99,96% beträgt. Außerdem sollten Spülgasraten des Schutzgases bei Verwendung von Schutzgas von bis zu 30 l/min pro Kubikmeter Ofenvolumen eingestellt werden, um einen leichten und sicheren Abtransport der freigesetzten Gase während der Pyrolyse zu gewährleisten.

In Bezug auf die vorstehend angegebenen Vorteile wird verfahrensgemäß die Pyrolyse mit Heiz- und Kühlraten im Bereich von 30°C/h bis 300°C/h, bevorzugt mit Heizund Kühlraten von 100°C/h, durchgeführt.

Es hat sich bewährt, die Pyrolyse in drei Heizstufen durchzuführen, wobei die erste Heizstufe bis zur Wärmebehandlungstemperatur mit einer Heizrate im Bereich von 50°C/h bis 300°C/h, die zweite Heizstufe mit einer Heizrate im Bereich von 5°C/h bis 300°C/h, bis wenigstens 70% der Umwandlung des Polymerharzes in Kohlenstoff erfolgt ist, und die dritte Heizstufe mit einer Heizrate im Bereich von 50°C/h bis 300°C/h bis zur Pyrolyse-Endtemperatur durchgeführt werden. Besonders gute Ergebnisse werden dann erzielt, wenn die erste Heizstufe mit einer Heizrate von etwa 100°C/h durchgeführt wird, während die zweite Heizstufe mit einer Heizrate von etwa 10°C/h und die dritte Heizstufe mit einer Heizrate von etwa 100°C/h durchgeführt werden sollten.

Für eine gleichmäßige Siliziuminfiltration sollte eine im wesentlichen konstante Temperatur während der gesamten Infiltrierung aufrechterhalten werden. Die Zeitdauer, während der die zur Infiltration notwendige Temperatur beibehalten werden soll, hängt stark von der ausgewählten Temperatur ab, wobei mit höherer Temperatur die Zeitdauer, die für die Infiltration erforderlich ist, abnimmt. Falls eine Temperatur während der Infiltration von kleiner 1800°C eingestellt wird, sollte diese Temperatur mindestens 3 Stunden aufrechterhalten werden. Wird allerdings für die Siliziuminfiltration eine Temperatur im Bereich von 1800°C bis etwa 2100°C gewählt, sollte die Zeitdauer, für die diese Temperatur aufrechterhalten wird, weniger als drei Stunden betragen.

Falls die Vorform aus einem Gewebelaminat aus Kohlenstoff-Fasern aufgebaut ist, wird das Silizium quer zu der Schichtstruktur des Laminataufbaus zugeführt. Um die Reaktion des infiltrierten Siliziums mit freiem Kohlenstoff, der nach der Pyrolyse vorhanden ist, reproduzierbar zu gestalten, sollte ein Silizium eingesetzt werden, das Verunreinigungen von weniger als 9 ppm enthält.

Um mehrere pyrolysierte Vorkörper gleichzeitig mit flüssigem Silizium zu infiltrieren, werden die Grünkörper in übereinander angeordneten Graphitwannen eingelegt derart, daß jeweils der Boden einer Graphitwanne auf dem Rand der darunterliegenden Graphitwanne aufliegt. Darüberhinaus wird jede Graphitwanne mit einem Trennmittel versehen. Vorzugsweise handelt es sich um eine Suspension, die eine wässrige Lösung aus Bornitridpulver und einem Haftvermittler enthält. Dieses Trennmittel aus Bomitridpulver und Haftvermittler wird auf die Flächen der Wanne aufgebracht und verbleibt, nach dem Entfernen des infiltrierten Formkörpers aus der Wanne, auf den Wannenflächen. Ein solches Trennmittel beeinflußt darüberhinaus nicht den Formkörper in seiner Struktur oder in sonstiger Weise.

Da mit der erfindungsgemäßen Verfahrensweise der Schwund, der darüberhinaus sehr gering ist, definiert und reproduzierbar eingestellt werden kann, ist es möglich, zwischen der Pyrolyse des Grünkörpers und dessen nachfolgender Silizierung diesen unter Berücksichtigung von einfachen Maßänderungen zu dimensionieren, wobei diese Maßänderung etwa 2% bezogen auf die Dimensionen des pyrolysierten Grünkörpers beträgt, um die gewünschten Endmaße zu erzielen. Eine Endbearbeitung des keramisierten Formkörpers ist, wenn überhaupt, nur in geringem Umfang erforderlich, da aufgrund der Maßzugabe bei der Bearbeitung des pyrolysierten Grünkörpers die Maßänderung, die während der Silizierung auftritt, kleiner 2% beträgt. Durch die Maßhaltigkeit, die mit dem erfindungsgemäßen Verfahren erzielbar ist, sind, wenn überhaupt, nur geringe Nachbearbeitungsschritte notwendig, um die gewünschten Dimensionen einzuhalten bzw. zu erreichen. Hierdurch ist gewährleistet, daß Schutzschichten, die sich während der Silizierung ausbilden, verbleiben und als Funktionsoberflächen verwendet werden können. Bei einer zu starken Nachbearbeitung würden ansonsten diese Schutzschichten größtenteils oder gänzlich entfernt werden. Solche Schutzschichten, die erhalten werden, können insbesondere als Korrosions- und Oxidationsschutzschichten verwendet werden, was besonders vorteilhaft beim Herstellen von Bremsschreiben gemäß der erfindungsgemäßen Verfahrensweise ist.

### Ausführungsbeispiel

Nachfolgend wird die Fertigung eines plattenförmigen Formkörpers mit Endmaßen von 286 mm x 286 mm x 14 mm beschrieben.

Als Ausgangsmaterial werden symmetrische Kohlenstoff-Fasergewebe verwendet mit folgenden Spezifikationen:
- HT Kohlenstoff-Fasern mit 12.000 Filamenten (HT bedeutet hochfeste Faserm)
- Gewebe mit Leinwandbindung aus HT-Fasern
- Flächengewicht 460 g/m²
- Phenolharz vom Typ Resol mit einer Viskosität von ca. 100 mPas, einer Kohlenstoffausbeute von etwa 60% und einem Lösungsmittelanteil von ca. 15% (Wasser)

Die Herstellung der Vorform wird wie folgt vorgenommen:

Es werden Gewebelagen mit einer Größe von 303,5 mm x 303,5 mm aus der Gewebebahn (1 m breit) geschnitten. Dann erfolgt eine Trocknung der einzelnen Gewebelagen bei 110°C für 2 Stunden. Anschließend werden 58 solcher Gewebelagen in eine Gewebekammer eingelegt. Das Übereinanderstapeln der einzelnen Gewebelagen erfolgt unter ständigem Wechsel von Kett- und Schußrichtung der Kohlenstoff-Fasern. Die Faserorientierung in jeder Lage entspricht somit 0° und 90°.

### Harzinfiltration

Das zu infiltrierende Polymerharz wird in einer Menge von 1200 g in eine Harzkammer eingebracht. Die Harzkammer sowie die Gewebekammer werden auf Infiltrationstemperatur von 70°C erhitzt und gleichzeitig durch Anlegen von Unterdruck -0,3 bar entgast. Anschließend erfolgt die Infiltration des Harzes über einen Verbindungskanal in die Vorform aus Kohlenstoff-Fasergeweben. Die Infiltration erfolgt in vertikaler Richtung unter Erhöhung des Differenzdrucks zwischen Harz- und Gewebekammer in mehreren Schritten von 0,3 auf 2 bar. Das Harz wird gleichmäßig über die Schnittkante der Gewebelagen, d.h. die Stirnseite der Vorform, infiltriert. Nach der Infiltration erfolgt ein Ausgasen flüchtiger Bestandteile des infiltrierten Polymerharzes, eine Spülung mit weiterem, frischen Polymerharz aus der Harzkammer zum Entfernen von verunreinigtem Harz (Faserteilchen, Entgasungsprodukte, usw.) über die der Harzzuführseite gegenüberliegenden Seite der Gewebekammer, bis der Formkörper vollständig mit reinem Harz durchsetzt ist. Nach dem Infiltrieren wird das Polymerharz bei 150°C eine Stunde gehärtet und anschließend auf Raumtemperatur abgekühlt. Anschließend wird der so hergestellte Grünkörper, der Außenmaße von 305 mm x 305 mm x 15,6 mm besitzt, aus der Gewebekammer entnommen.

### Wärmebehandlung

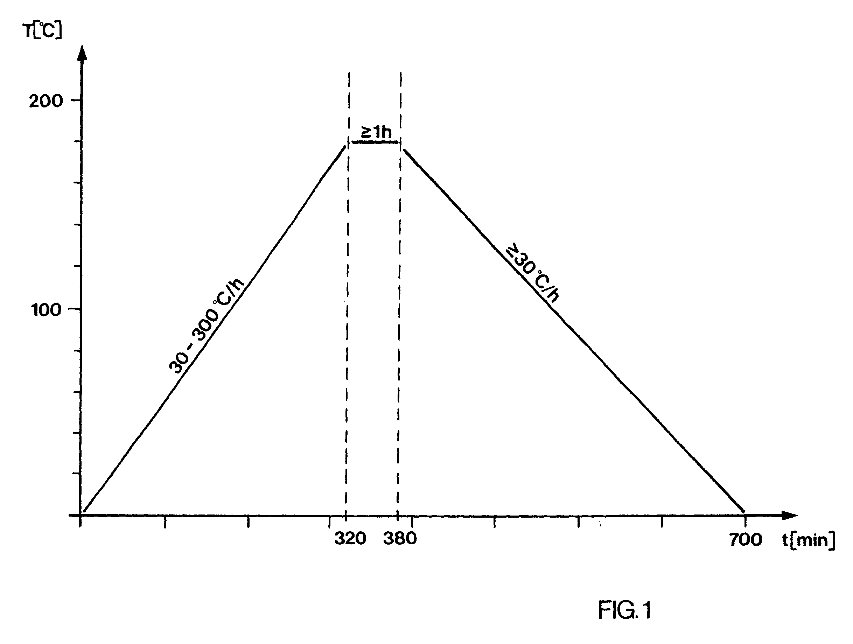

Der so hergestellte Grünkörper wird dann einer Wärmebehandlung unter Luftatmosphäre bei Umgebungsdruck unterworfen. Der Wärmebehandlungszyklus ist in Figur 1, die die Temperatur in Abhängigkeit von der Zeit in einer graphischen Darstellung zeigt, dargestellt. Hiernach erfolgt ein Aufheizen von Raumtemperatur zunächst auf 180°C mit einer Heizrate von 30°C/h (somit für eine Dauer von ca. 5 Stunden). Beim Erreichen der Temperatur von 180° wird diese Temperatur für eine Stunde aufrechterhalten; für Bauteile mit besonders großer Wandstärke (größer 10 mm) sind Haltedauem bis zu 8 Stunden einzuhalten. Danach erfolgt eine Abkühlung unter einer definierten Abkühlrate, die etwa 30°C/h beträgt, bis Raumtemperatur erreicht wird. Die Gesamtzeit der Wärmebehandlung ergibt sich mit ca. 11 Stunden.

### Mechanische Zwischenbearbeitung

An dieser Stelle des Verfahrensablaufs wird eine mechanische Zwischenbearbeitung durchgeführt, um eventuelle Dimensionsungenauigkeiten des Grünkörpers auszugleichen und ihn auf etwa Endabmessung inklusive einer Maßzugabe zu bearbeiten. Hierbei wird der Grünkörper auf Dimensionen von 288 mm x 288 mm x 15,6 mm mittels Diamantsäge besäumt. Nach dieser mechanischen Zwischenbearbeitung erfolgt eine Trocknung des Grünkörpers bei 110°C für 2 Stunden.

### Pyrolyse des Grünkörpers

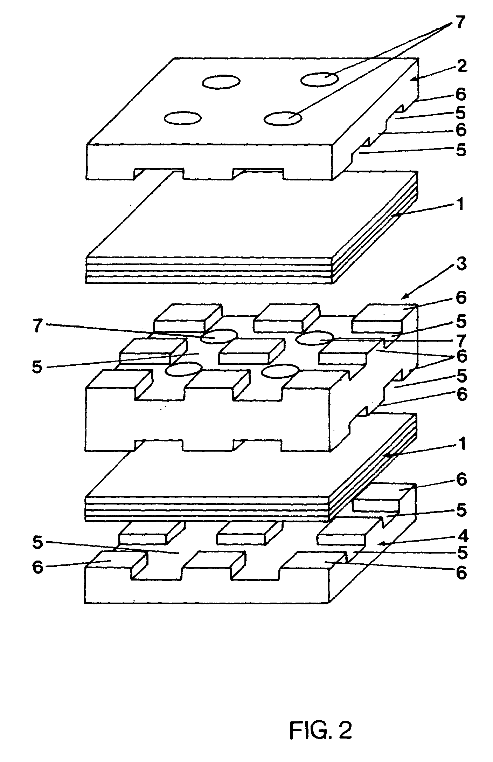

Zwei Grünkörper 1, wie sie vorstehend beschrieben sind, werden, wie in Figur 2 dargestellt ist, zwischen genuteten Graphitplatten 2, 3 und 4 zwischengefügt, wobei die Graphitplatten 2 und 4 nur auf der dem Grünkörper 1 zugewandten Seite genutet sind, während die Graphitplatte 3 auf Ober- und Unterseite eine genutete Fläche aufweist. Die Nuten 5 sind in zwei senkrecht zueinander verlaufenden Richtungen derart ausgeführt, daß jeweils Erhebungen 6 gebildet sind, die die Anlageflächen für den Grünkörper 1 bilden. Die Nuten 5 dienen dazu, während der Pyrolyse auftretende Gase abzuführen. Hierzu können auch zusätzlich Bohrungen 7 vorgesehen werden. Die Masse der oberen Graphitplatte 2 betrug 10 kg, die Masse der mittleren Graphitplatte 3 ebenfalls 10 kg. Dadurch ergibt sich eine Druckbelastung von etwa 1200 N/m² für den oberen Grünkörper 1 und von etwa 2600 N/m² für den unteren Grünkörper 1. Die Anordnung wird in eine Ofenkammer eingebracht, aus der nach deren Schließen die Luft abgesaugt wird. Anschließend wird die Ofenkammer mit Stickstoff unter einer Rate von 30 l/min gespült.

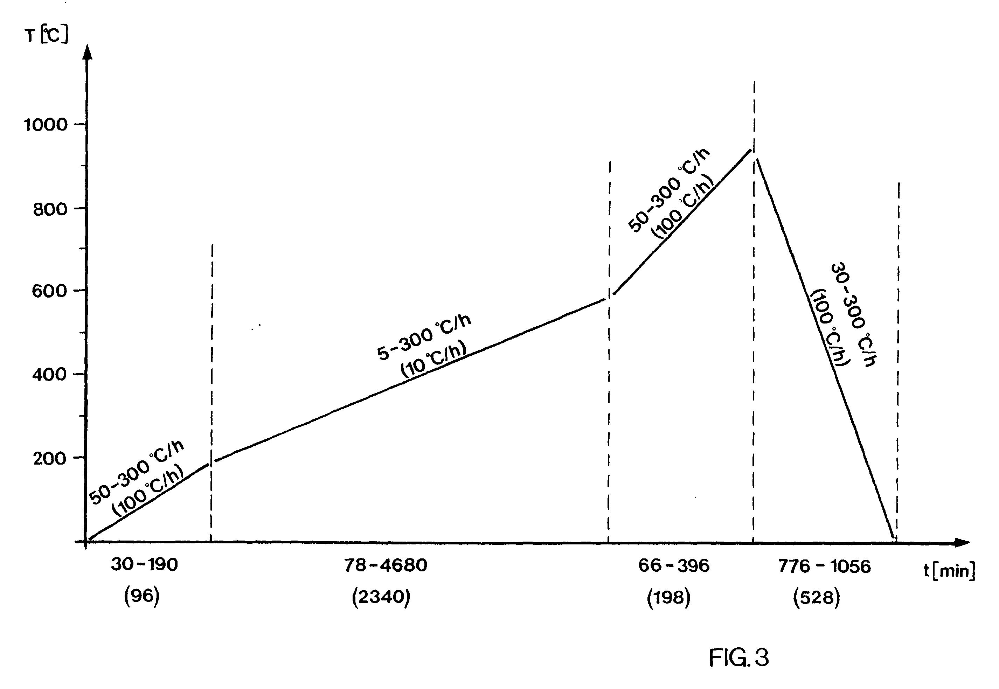

Der Pyrolysezyklus wird unter Beibehaltung des Spülens mit Stickstoff unter einer Rate von 30 l/min gestartet. Hierbei wird ein Temperaturprofil in dem Ofen eingestellt, wie es in Figur 3 dargestellt ist. Zunächst erfolgt ein schnelles Aufheizen auf 180°C (Wärmebehandlungstemperatur) mit einer Aufheizrate von 100°C/h. Nach Erreichen dieser Temperatur von 180°C erfolgt ein weiteres Aufheizen auf eine Temperatur von 570°C unter einer Heizrate von 10°C/h. (Die einzelnen Dauern der Heizabschnitte sind der Figur 3 unmittelbar zu entnehmen, wobei der untere (in Klammern gesetzte) Zahlenbereich die mögliche Variationsbreite zeigt, während der obere Wert die bevorzugte Aufheizrate darstellt). Die zweite Heizstufe wird so lange durchgeführt, bis eine Umwandlung von wenigstens 70% des Polymerharzes in Kohlenstoff erfolgt ist (in dem gezeigten Beispiel beträgt diese Zeitdauer ca. 39 Stunden).

In der dritten Heizphase erfolgt ein schnelles Aufheizen von 570°C auf 900°C, wobei 900°C die maximale Pyrolysetemperatur darstellt. Die Aufheizrate liegt bei etwa 100°C/h. In Bezug auf die Zeitdauern wird wiederum auf Figur 3 verwiesen. Danach erfolgt ein schnelles Abkühlen von 900°C auf Raumtemperatur mit einer Abkühlrate von 100°C/h, gegebenenfalls unter Zwangskühlung.

Der Grünkörper wird nun dem Ofen entnommen und es folgt eine Prüfung in Bezug auf Porosität, Dichte und größere Fehlstellen (z.B. Lunker oder Delamination). Unter Einhaltung der vorstehend angegebenen Parameter sind Fehlstellen nicht festzustellen. Falls dennoch eine solche Delaminierung aufgrund irgendwelcher Unregelmäßigkeiten auftreten sollte, wird dieses Bauteil ausgesondert.

Die pyrolysierten Grünkörper, dem Ofen entnommen, besitzen jeweils Außenabmessungen von 288 mm x 288 mm x 14,3 mm.

### Siliziuminfiltration

In dem beschriebenen Beispiel wird Silizium flüssig in den pyrolysierten Grünkörper infiltriert. Allerdings besteht auch die Möglichkeit, Silizium in Dampfform in die Rißstruktur des Grünkörpers zu infiltrieren.

Die Infiltration des flüssigen Siliziums erfolgt in einer Graphitwanne mit einem Durchmesser von 420 mm. Die Graphitwanne wird zunächst mit einer Bornitridsuspension beschichtet, die mit einem Pinsel aufgetragen wird. Danach wird die Fläche des Grünkörpers (288 mm x 288 mm) in der beschichteten Graphitwanne mittig markiert. Auf diese markierte Fläche werden dann 480 g Siliziumgranulat in einer gleichmäßig dicken Schicht aufgebracht. Anschließend erfolgt das Auflegen des pyrolysierten Grünkörpers auf die mit Granulat bedeckte Fläche, woraufhin weitere 240 g Siliziumgranulat gleichmäßig auf den Grünkörper aufgebracht werden. Insgesamt werden so in die Graphitwanne 720 g Siliziumgranulat gleichmäßig eingebracht, was 45 Masse-Prozent des pyrolysierten Grünkörpers entspricht. Das Granulat besitzt eine Korngröße bis 15 mm und eine Verunreinigung von geringer 9 ppm. Die Graphitwanne wird dann mit einem Graphitdeckel, der ebenfalls mit Bornitridsuspension bestrichen ist, abgedeckt. Nach dem Schließen des Ofens erfolgt eine Absaugung der Luft innerhalb der Graphitwanne und eine Spülung mit Stickstoff. Anschließend wird ein Druck in der Ofenkammer von 10⁻² mbar eingestellt und aufrechterhalten.

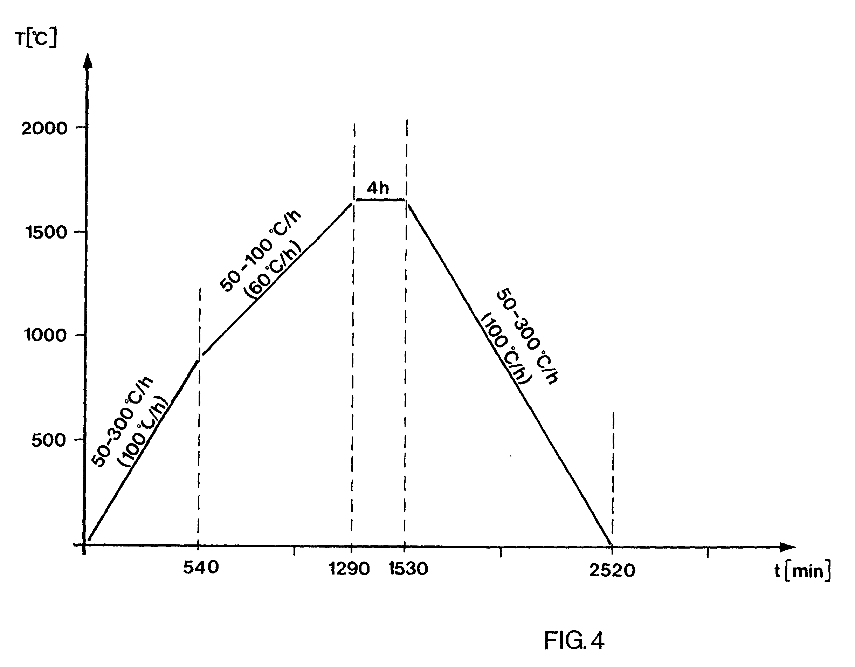

Der Ofen wird nun mit einem Temperaturprofil aufgeheizt, wie dieses in Figur 4 dargestellt ist. Zunächst erfolgt eine Aufheizung auf 900°C in einer ersten Heizstufe unter einer Aufheizrate von etwa 100°C/h. Diese erste Aufheizperiode wird über etwa 9 Stunden durchgeführt. Danach wird die Aufheizrate herabgesetzt auf 60°C/h, bis dann eine Temperatur von 1650°C erreicht wird, die oberhalb der Schmelztemperatur von Silizium liegt. Diese Temperatur von 1650°C wird dann für 4 Stunden gehalten, so daß gewährleistet ist, daß das flüssige Silizium von der Oberseite und der Unterseite durch Kapillarwirkung in den Grünkörper infiltriert wird. Hiernach erfolgt eine Abkühlung mit einer Kühlrate von etwa 100°C/h bis auf Raumtemperatur. Nach Erreichen einer Temperatur von 50°C wird mit Stickstoff gespült unter Einstellung von Atmosphärendruck. Das Bauteil wird entnommen und zeigt eine Außenabmessung von 286 mm x 286 mm x 14 mm. Das Bauteil wird dann einer Qualitätskontrolle in Bezug auf Delamination, Restporosität und Dichte mittels Ultraschall - und/oder Röntgenprüfung unterworfen.

Das gemäß der vorstehenden Verfahrensweise hergestellte Formteil zeigt folgende Werte:
Anteil an freiem Si: 1,2%
Dichte: 1,92 g/cm³
Restporosität: 5% bezogen auf das Gesamtvolumen
3-Punkt-Biegefestigkeit = 80 MPa (l/d = 5,1 = Auflagerabstand und d = Dicke des Formkörpers)
Faservolumengehalt: 64%
Keramikmassengehalt (= SiC-Massengehalt): 39%

Entsprechend der vorstehend angegebenen Verfahrensweise können, unter entsprechender Dimensionsierung des Grünkörpers, Bauteile so ausgelegt werden, daß sie auf Endmaß gefertigt werden, beispielsweise Bremsscheiben oder Bremsbeläge.

Eine Endbearbeitung der Oberfläche kann in geringem Umfang mittels Diamantsägen, -Bohrern oder -Schleifern erfolgen.

## Patentansprüche

1. Verfahren zur Herstellung eines mit Kohlenstoff-Fasern verstärkten, keramisierten Formkörpers, bei dem in eine Kohlenstoff-Fasern enthaltende, poröse Vorform des Formkörpers Polymerharz, insbesondere ein Polymerharz auf Phenol-Basis, infiltriert und gehärtet wird, der so erhaltene Grünkörper einer Pyrolyse zur Umwandlung des Polymerharzes in Kohlenstoff unterworfen wird und in diesen danach Silizium, vorzugsweise in flüssiger Phase, bei einer Temperatur von mindestens 1400°C infiltriert wird, das mit Kohlenstoff zu Siliziumkarbid reagiert, **dadurch gekennzeichnet, daß** zur Herstellung eines keramisierten Formkörpers mit einem Gehalt an freiem Silizium von kleiner als 2 Gew.-% und einer Restporosität von maximal 5 Vol.-% vor der Pyrolyse die mit Polymerharz infiltrierte Vorform auf eine Wärmebehandlungstemperatur erhitzt wird, die 20°C bis 70°C über der Temperatur liegt, bei der das Polymerharz aushärtet, daß die Wärmebehandlungstemperatur für eine Dauer von mindestens 1 Stunde aufrechterhalten und danach der Grünkörper auf Raumtemperatur mit einer Kühlrate von wenigstens 30°C/h abgekühlt wird, daß während der Pyrolyse der Grünkörper einer mit zunehmender Dicke des Grünkörpers ansteigenden, mechanischen Druckbelastung, insbesondere Flächenpressung, unterworfen wird, und daß nach Abschluß der Pyrolyse der Grünkörper mit Kühlraten im Bereich von 30°C/h bis 300°C/h auf Raumtemperatur abgekühlt wird.

2. Verfahren nach Anspruch 1, **dadurch gekennzeichnet, daß** bei einer Vorform mit einem Gewebeaufbau aus Kohlenstoff-Fasern das Polymerharz über eine Gewebeschnittkante und über die gesamte Dicke der Vorform in die Vorform injiziert wird.

3. Verfahren nach Anspruch 1, **dadurch gekennzeichnet, daß** die Wärmebehandlung in Luftatmosphäre bei Umgebungsdruck durchgeführt wird.

4. Verfahren nach Anspruch 1, **dadurch gekennzeichnet, daß** die Erhitzung auf die Wärmebehandlungstemperatur in Stufen mit unterschiedlichen Aufheizraten durchgeführt wird.

5. Verfahren nach Anspruch 4, **dadurch gekennzeichnet, daß** die Erhitzung von Raumtemperatur bis auf Wärmebehandlungstemperatur mit Heizraten im Bereich von 30°C/h bis 300°C/h durchgeführt wird.

6. Verfahren nach Anspruch 1, **dadurch gekennzeichnet, daß** die Flächenpressung durch Beschwerung des Grünkörpers mit gelochten und/oder genuteten Graphit- oder Stahlplatten durchgeführt wird.

7. Verfahren nach Anspruch 6, **dadurch gekennzeichnet, daß** die Flächenpressung mit genuteten Platten durchgeführt wird, deren nicht genutete Kontakt-Fläche jeweils zwischen 30% und 60% der Gesamtplattenfläche liegt.

8. Verfahren nach einem der Ansprüche 1, 6 oder 7, **dadurch gekennzeichnet, daß** die mechanische Druckbelastung bzw. Flächenpressung mindestens mit einem Druck durchgeführt wird, der sich aus P = 100 + t x 65 [N/m²] errechnet, wobei t = Wandstärke der Vorform in [mm] ist.

9. Verfahren nach Anspruch 1, **dadurch gekennzeichnet, daß** bei einer Vorform mit einem Laminataufbau mit zweidimensionalen Gewebeschichten aus Kohlenstoff-Fasern die mechanische Druckbelastung senkrecht zu den Gewebeebenen gleichmäßig verteilt wird.

10. Verfahren nach Anspruch 1, **dadurch gekennzeichnet, daß** die Pyrolyse mehrerer Grünkörper im Stapel durchgeführt wird, wobei im wechselnden Aufbau genutete Druckplatten und Grünkörper den Stapel bildend angeordnet sind.

11. Verfahren nach Anspruch 1, **dadurch gekennzeichnet, daß** die Pyrolyse in Luftatmosphäre bei einem Druck ≤ 1 mbar oder unter Inertgas durchgeführt wird.

12. Verfahren nach Anspruch 11, **dadurch gekennzeichnet, daß** die Pyrolyse unter Stickstoff durchgeführt wird, dessen Reinheit wenigstens 99,96 % beträgt.

13. Verfahren nach Anspruch 1, **dadurch gekennzeichnet, daß** die Pyrolyse mit Heiz- und Kühlraten im Bereich von 30°C/h bis 300°C/h, bevorzugt mit Heizund Kühlraten von 100°C/h, durchgeführt wird.

14. Verfahren nach Anspruch 1, **dadurch gekennzeichnet, daß** die Pyrolyse in drei Heizstufen durchgeführt wird, wobei die erste Heizstufe bis zur Wärmebehandlungstemperatur mit einer Heizrate im Bereich von 50°C/h bis 300°C/h, die zweite Heizstufe mit einer Heizrate im Bereich von 5°C/h bis 300°C/h, bis wenigstens 70% der Umwandlung des Polymerharzes in Kohlenstoff erfolgt sind, und die dritte Heizstufe mit einer Heizrate im Bereich von 50°C/h bis 300°C/h bis zur Pyrolyse-Endtemperatur durchgeführt werden.

15. Verfahren nach Anspruch 14, **dadurch gekennzeichnet, daß** die erste Heizstufe mit einer Heizrate von etwa 100°C/h durchgeführt wird.

16. Verfahren nach Anspruch 14, **dadurch gekennzeichnet, daß** die zweite Heizstufe mit einer Heizrate von etwa 10°C/h durchgeführt wird.

17. Verfahren nach Anspruch 14, **dadurch gekennzeichnet, daß** die dritte Heizstufe mit einer Heizrate von etwa 100°C/h durchgeführt wird.

18. Verfahren nach Anspruch 1, **dadurch gekennzeichnet, daß** während der Siliziuminfiltration eine im wesentlichen konstanteTemperatur aufrechterhalten wird, wobei die Zeitdauer der Aufrechterhaltung mit der Höhe der Temperatur abnimmt.

19. Verfahren nach Anspruch 18, **dadurch gekennzeichnet, daß** während der Siliziuminfiltration eine Temperatur von < 1800°C für eine Zeitdauer von mindestens 3 Stunden aufrechterhalten wird.

20. Verfahren nach Anspruch 18, **dadurch gekennzeichnet, daß** während der Siliziuminfiltration eine Temperatur von > 1800°C bis etwa 2100°C für eine Zeitdauer von weniger als 3 Stunden aufrechterhalten wird.

21. Verfahren nach Anspruch 1, **dadurch gekennzeichnet, daß** bei einer Vorform mit Laminataufbau aus Kohlenstoff-Fasern das Silizium quer zum Laminataufbau zugeführt wird.

22. Verfahren nach Anspruch 1, **dadurch gekennzeichnet, daß** Silizium, das weniger als 9 ppm Verunreinigungen enthält, infiltriert wird.

23. Verfahren nach Anspruch 1, **dadurch gekennzeichnet, daß** die Infiltration von Silizium in stapelbaren Graphitwannen durchgeführt wird.

24. Verfahren nach Anspruch 23, **dadurch gekennzeichnet, daß** vor der Infiltration von Silizium zwischen den Grünkörper und die Graphitwanne ein Trennmittel eingebracht wird.

25. Verfahren nach Anspruch 24, **dadurch gekennzeichnet, daß** als Trennmittel eine Suspension, die eine wässrige Lösung von Bornitridpulver und einen Haftvermittler enthält, eingebracht wird.

26. Verfahren nach Anspruch 1, **dadurch gekennzeichnet, daß** der Grünkörper während einer Zeitdauer von etwa 2 Stunden bei einer Temperatur von etwa 110°C getrocknet wird.

27. Verwendung der nach dem Verfahren nach einem der Ansprüche 1 bis 26 hergestellten Formkörper für Bremsscheiben.

## Claims

1. A method of making a carbon fiber-reinforced ceramified shaped body, wherein polymer resin, in particular a polymer resin based on phenol, is infiltrated into and cured in a porous preform of the shaped body which contains carbon fibers, the resulting green body is subjected to pyrolysis for converting the polymer resin into carbon, and silicon, preferably in a liquid phase, is then infiltrated thereinto at a temperature of at least 1400°C, said silicon reacting with carbon to form silicon carbide, **characterized in that** for producing a ceramified shaped body with a content of free silicon of less than 2% by wt. and a residual porosity of not more than 5% by vol. prior to pyrolysis, the preform infiltrated with polymer resin is heated to a heat treatment temperature which is 20°C to 70°C above the temperature at which the polymer resin cures, that the heat treatment temperature is maintained for a period of at least 1 hour and the green body is then cooled to room temperature at a cooling rate of at least 30°C/h, that during pyrolysis the green body is subjected to a mechanical pressure load, in particular surface pressure, rising with an increasing thickness of the shaped body, and that upon completion of the pyrolysis process the green body is cooled at cooling rates in the range of 30°C/h to 300°C to room temperature.

2. The method according to claim 1, **characterized in that** in a preform having a fabric structure of carbon fibers, the polymer resin is injected into the preform via a cut fabric edge and over the whole thickness of the preform.

3. The method according to claim 1, **characterized in that** the heat treatment is carried out under air atmosphere at an ambient temperature.

4. The method according to claim 1, **characterized in that** heating to the heat treatment temperature is carried out in stages at different heating rates.

5. The method according to claim 4, **characterized in that** heating from room temperature to the heat treatment temperature is carried out at heating rates ranging from 30°C/h to 300°C/h.

6. The method according to claim 1, **characterized in that** surface pressing is carried out by weighting the green body with perforated and/or grooved graphite or steel plates.

7. The method according to claim 6, **characterized in that** surface pressing is carried out with grooved plates the non-grooved contact surface of which is between 30% and 60% of the total plate surface.

8. The method according to any one of claims 1, 6, or 7, **characterized in that** mechanical pressure loading or surface pressing is carried out at least at a pressure which is calculated from P = 100 + t x 65 [N/m²], wherein t = the wall thickness of the preform in [mm].

9. The method according to claim 1, **characterized in that** in a preform having a laminate structure with two-dimensional fabric layers of carbon fibers, the mechanical pressure load is evenly distributed in a direction perpendicular to the fabric planes.

10. The method according to claim 1, **characterized in that** pyrolysis is carried out with a plurality of green bodies in a stack, grooved pressure plates and green bodies being alternatingly arranged to form the stack.

11. The method according to claim 1, **characterized in that** pyrolysis is carried out under air atmosphere at a pressure ≤ 1 or under inert gas.

12. The method according to claim 11, **characterized in that** pyrolysis is carried out under nitrogen whose purity is at least 99.96%.

13. The method according to claim 1, **characterized in that** pyrolysis is carried out at heating and cooling rates ranging from 30°C/h to 300°C/h, preferably at heating and cooling rates of 100°C/h.

14. The method according to claim 1, **characterized in that** pyrolysis is carried out in three heating stages, the first heating stage up to the heat treatment temperature being carried out at a heating rate ranging from 50°C/h to 300°C/h, the second heating stage at a heating rate ranging from 5°C to 300°C/h until at least 70% of the polymer resin is converted into carbon, and the third heating stage at a heating rate ranging from 50°C/h to 300°C/h up to the end temperature of the pyrolysis process.

15. The method according to claim 14, **characterized in that** the first heating stage is carried out at a heating rate of about 100°C/h.

16. The method according to claim 14, **characterized in that** the second heating stage is carried out at a heating rate of about 10°C/h.

17. The method according to claim 14, **characterized in that** the third heating stage is carried out at a heating rate of about 100°C/h.

18. The method according to claim 1, **characterized in that** during silicon infiltration a substantially constant temperature is maintained, the maintenance period decreasing with the level of the temperature.

19. The method according to claim 18, **characterized in that** during silicon infiltration a temperature of < 1800°C is maintained for a period of at least 3 hours.

20. The method according to claim 18, **characterized in that** during silicon infiltration a temperature of >1800°C to about 2100°C is maintained for a period of less than 3 hours.

21. The method according to claim 1, **characterized in that** in a preform with a laminate structure of carbon fibers the silicon is supplied in a direction transverse to the laminate structure.

22. The method according to claim 1, **characterized in that** silicon containing less than 9 ppm impurities is infiltrated.

23. The method according to claim 1, **characterized in that** the infiltration of silicon is carried out in stackable graphite tubs.

24. The method according to claim 23, **characterized in that** prior to the infiltration of silicon a release agent is introduced between the green body and the graphite tub.

25. The method according to claim 24, **characterized in that** a suspension containing an aqueous solution of boron nitride powder and an adhesion promoter is introduced as the release agent.

26. The method according to claim 1, **characterized in that** the green body is dried at a temperature of about 110°C for a duration of about 2 hours.

27. Use of the shaped bodies made according to the method according to any one of claims 1 to 26, for brake disks.

## Revendications

1. Procédé pour la préparation d'un corps moulé céramisé, renforcé par des fibres de carbone, dans lequel une résine polymère, en particulier une résine polymère à base de phénol, est infiltrée et durcie dans une ébauche poreuse, contenant des fibres de carbone, du corps moulé, le corps à l'état vert ainsi obtenu est soumis à une pyrolyse pour transformer la résine polymère en carbone et du silicium, de préférence en phase liquidé, est après cela infiltré dans celui-ci à une température d'au moins 1400°C, lequel réagit avec le carbone pour produire du carbure de silicium, **caractérisé en ce que** l'on chauffe l'ébauche infiltrée de résine polymère à une température de traitement thermique qui est de 20°C à 70°C supérieure à la température à laquelle la résine polymère durcit pour la préparation d'un corps moulé céramisé ayant une teneur en silicium libre inférieure à 2 % en poids et une porosité résiduelle maximale de 5 % en volume avant la pyrolyse, **en ce que** l'on maintient la température de traitement thermique sur une durée d'au moins 1 h et on refroidit après cela le corps à l'état vert jusqu'à la température ambiante avec une vitesse de refroidissement d'au moins 30°C/h, **en ce que** l'on soumet le corps à l'état vert pendant la pyrolyse à une charge de pression mécanique, en particulier une pression superficielle, croissant avec une épaisseur croissante du corps à l'état vert, et **en ce que** l'on refroidit jusqu'à la température ambiante à la fin de la pyrolyse le corps à l'état vert avec des vitesses de refroidissement se trouvant dans le domaine de 30°C/h à 300°C/h.

2. Procédé selon la revendication 1, **caractérisé en ce que**, pour une ébauche avec une constitution de tissu, constituée de fibres de carbone, on injecte dans l'ébauche la résine polymère sur une arête de coupe de tissu et sur l'épaisseur totale de l'ébauche.

3. Procédé selon la revendication 1, **caractérisé en ce que** l'on réalise le traitement thermique dans une atmosphère d'air à pression atmosphérique.

4. Procédé selon la revendication 1, **caractérisé en ce que** l'on réalise le chauffage jusqu'à la température de traitement thermique en étapes avec des vitesses de chauffage différentes.

5. Procédé selon la revendication 4, **caractérisé en ce que** l'on réalise le chauffage de la température ambiante jusqu'à la température de traitement thermique avec des vitesses de chauffage dans le domaine de 30°C/h à 300°C/h.

6. Procédé selon la revendication 1, **caractérisé en ce que** l'on réalise la pression superficielle en chargeant le corps à l'état vert de plaques de graphite ou d'acier perforées et/ou rainurées.

7. Procédé selon la revendication 6, **caractérisé en ce que** l'on réalise la pression superficielle avec des plaques rainurées dont les surfaces de contact non rainurées constituent à chaque fois entre 30 % et 60 % de la surface totale de la plaque.

8. Procédé selon l'une quelconque des revendications 1, 6 ou 7, **caractérisé en ce que** la charge de pression mécanique respectivement la pression superficielle est réalisée au moins avec une pression qui se calcule à partir de P = 100 + t x 65 [N/m²], t = épaisseur de paroi de l'ébauche en [mm].

9. Procédé selon la revendication 1, **caractérisé en ce que**, pour une ébauche présentant une constitution de stratifié avec des couches de tissu bidimensionnelles constituées de fibres de carbone, la charge de pression mécanique est distribuée uniformément perpendiculairement aux plans du tissu.

10. Procédé selon la revendication 1, **caractérisé en ce que** l'on réalise la pyrolyse de plusieurs corps à l'état vert en pile, des plaques de pression rainurées et des corps à l'état vert formant la pile étant disposées de manière alternée.

11. Procédé selon la revendication 1, **caractérisé en ce que** la pyrolyse est réalisée dans une atmosphère d'air à une pression ≤ 1 mbar ou sous gaz inerte.

12. Procédé selon la revendication 11, **caractérisé en ce que** la pyrolyse est réalisée sous azote dont la pureté est d'au moins 99,96 %.

13. Procédé selon la revendication 1, **caractérisé en ce que** la pyrolyse est réalisée avec des appareils de chauffage et de refroidissement dans le domaine de 30°C/h à 300°C/h, de préférence avec des appareils de chauffage et de refroidissement de 100°C/h.

14. Procédé selon la revendication 1, **caractérisé en ce que** la pyrolyse est réalisée en trois étapes de chauffage, la première étape de chauffage étant réalisée jusqu'à la température de traitement thermique avec une vitesse de chauffage dans le domaine de 50°C/h à 300°C/h, la seconde étape de chauffage avec une vitesse de chauffage dans le domaine de 5°C/h à 300°C/h jusqu'à ce qu'au moins 70 % de la transformation de la résine polymère en carbone aient eu lieu, et la troisième étape de chauffage avec une vitesse de chauffage dans le domaine de 50°C/h à 300°C/h jusqu'à la température finale de la pyrolyse.

15. Procédé selon la revendication 14, **caractérisé en ce que** la première étape de chauffage est réalisée avec une vitesse de chauffage d'environ 100°C/h.

16. Procédé selon la revendication 14, **caractérisé en ce que** la seconde étape de chauffage est réalisée avec une vitesse de chauffage d'environ 10°C/h.

17. Procédé selon la revendication 14, **caractérisé en ce que** la troisième étape de chauffage est réalisée avec une vitesse de chauffage d'environ 100°C/h.

18. Procédé selon la revendication 1, **caractérisé en ce que** l'on maintient une température essentiellement constante pendant l'infiltration du silicium, la durée du maintien diminuant avec la hauteur de la température.

19. Procédé selon la revendication 18, **caractérisé en ce que** l'on maintient une température < 1800°C sur une durée d'au moins 3 h pendant l'infiltration du silicium.

20. Procédé selon la revendication 18, **caractérisé en ce que** l'on maintient une température > 1800°C à environ 2100°C sur une durée inférieure à 3 h pendant l'infiltration du silicium.

21. Procédé selon la revendication 1, **caractérisé en ce que** pour une ébauche avec une constitution de stratifié, constituée de fibres de carbone, on introduit le silicium perpendiculairement par rapport à la constitution du stratifié.

22. Procédé selon la revendication 1, **caractérisé en ce que** l'on réalise l'infiltration de silicium qui contient moins de 9 ppm d'impuretés.

23. Procédé selon la revendication 1, **caractérisé en ce que** l'on réalise l'infiltration du silicium dans des cuves en graphite pouvant être empilées.

24. Procédé selon la revendication 23, **caractérisé en ce que** l'on introduit entre le corps à l'état vert et la cuve en graphite un moyen de séparation avant l'infiltration du silicium.

25. Procédé selon la revendication 24, **caractérisé en ce que** l'on applique comme moyen de séparation une suspension qui contient une solution aqueuse de poudre de nitrure de bore et un agent adhésif.

26. Procédé selon la revendication 1, **caractérisé en ce que** le corps à l'état vert est séché pendant une durée d'environ 2 h à une température d'environ 110°C.

27. Utilisation du corps moulé préparé selon le procédé selon l'une quelconque des revendications 1 à 26 pour des disques de frein.
